# FASCICULE DE BREVET EUROPEEN

(11) **EP 1 168 844 B1**
(45) Date de publication et mention de la délivrance du brevet: **02.04.2003**
(21) Numéro de dépôt: 01401564.8
(22) Date de dépôt: 14.06.2001
(51) Int. Cl.: H04N 7/16

(54) **Procédé de sécurisation d'une transaction entre un utilisateur et un fournisseur**
Verfahren für gesicherte Transaktionen zwischen einem Anwender und einem Dienstanbieter
Method for secure transaction between a user and a provider

(30) Priorité: 22.06.2000 FR 0008038
(43) Date de publication de la demande: 02.01.2002
(73) Titulaire: SAGEM S.A., 75015 Paris (FR)
(72) Inventeur: Meulle, Philippe, 78300 Poissy (FR)
(74) Mandataire: Schmit, Christian Norbert Marie

(56) Documents cités:
- EP-A- 0 818 908
- EP-A- 0 994 625
- WO-A-00/22907
- WO-A-97/12486
- WO-A-99/60458

## Description

La présente invention a pour objet un procédé de sécurisation d'une transaction entre un utilisateur et un fournisseur. Le domaine de l'invention est celui des réseaux télématiques, et de la certification d'informations transitant sur ces réseaux. Ici il faut comprendre certification comme volonté de la part du récepteur de s'assurer que le message qu'il vient de recevoir a bien été émis par celui qui prétend l'avoir émis. Un but de l'invention est de limiter les risques de fraudes entre les parties d'une transaction. Un autre but de l'invention est de simplifier la procédure d'envoi d'informations confidentielles par un utilisateur vers un fournisseur par exemple.

Dans l'état de la technique on connaît des modes de transaction utilisant la cryptographie, voir e.g. WO-A-99/60458. Cette solution consiste à échanger sur un canal public des données à un format privé. Par exemple considérons le réseau Internet. Sur ce réseau un utilisateur est libre de naviguer sur des sites avec lesquels il va établir une communication. Au cours de cette communication un certain nombre de données vont être échangées. Parmi ces données il est possible que se trouvent des informations confidentielles sur l'utilisateur. Ces informations peuvent être par exemple un numéro de sécurité sociale, un numéro de carte bancaire, ou tout autre renseignement à caractère privé que l'utilisateur ne souhaite pas voir divulgué. Pour assurer cette non-divulgation, ces informations sont transmises dans un format crypté. Ainsi les informations cryptées peuvent être interceptées, car on est sur un réseau public, mais ne peuvent pas être décodées et donc ne sont finalement pas accessibles. Cette solution présente cependant un problème. En effet, si l'émetteur est sûr que ces informations ne seront pas accédées par un autre que le destinataire du message, le destinataire lui n'est pas sûr de l'identité de la personne qui lui envoie le message. En effet, une personne malveillante peut très bien intercepter le message crypté et s'en servir pour l'envoyer tel qu'à une requête d'un site. Il est aussi possible qu'une personne malveillante se soit procuré des informations confidentielles sur un tiers et les utilise sur le réseau Internet. Le destinataire des messages comportant ces informations confidentielles même cryptées n'a aucun moyen de vérifier leur provenance.

On connaît aussi une méthode qui consiste à prendre un premier contact sur Internet, par exemple pour passer une commande, puis à confirmer ou à poursuivre la communication par courrier par exemple. Cette solution garantit toujours la confidentialité à l'émetteur. Cependant le récepteur est toujours incertain quant à l'identité de l'émetteur. En effet une personne malveillante motivée ne reculera pas devant l'écriture d'un courrier. Un autre inconvénient de cette solution est qu'elle multiplie les démarches que doit effectuer l'utilisateur du système. En effet il faut tout d'abord se connecter sur un site, puis passer une commande, puis confirmer cette commande. Cela augmente donc le nombre d'opérations, donc le nombre de possibilités de commettre des erreurs au cours de ces opérations.

L'invention résout ces problèmes en partant du principe qu'un utilisateur a à sa disposition plusieurs types de services accessibles soit à partir de différents réseaux, ou en utilisant différents protocoles. L'un de ces réseaux, soit ces protocoles, offrent des conditions de résistance aux piratages satisfaisantes. Ainsi dans l'invention un utilisateur se connecte à un site Internet sur lequel il a besoin de s'identifier pour effectuer certaines opérations. Pour cette identification, l'utilisateur utilise des informations à la disposition de tout le monde, donc dans le domaine public. Ces informations sont par exemple un nom et un prénom. Le serveur sur lequel est hébergé le site auquel est connecté l'utilisateur émet alors une requête en direction du serveur d'un opérateur, par exemple de télévision, auquel est abonné l'utilisateur. Cette requête comporte les éléments permettant d'identifier l'utilisateur, ainsi que la description de l'action que souhaite effectuer l'utilisateur. A la réception de cette requête, le serveur de l'opérateur émet à son tour une requête en direction de l'utilisateur. Cependant cette requête n'est pas émise selon le même protocole que celui employé pour la communication entre l'utilisateur et le serveur de site Internet. Par exemple le protocole utilisé est celui utilisé par les opérateurs de télévision pour envoyer des messages de maintenance aux abonnés aux réseaux de télévision. Ainsi le serveur de l'opérateur de télévision encapsule la description de l'action que souhaite effectuer l'utilisateur et envoie cette description via un EMM (Entitled Management Message) destiné à l'utilisateur. Ce message parvient à l'utilisateur, en général via un satellite, et ne peut être décrypté que par lui seul. Cela est garanti par une norme de diffusion de programmes de télévision par satellite. Dès que l'utilisateur reçoit cet EMM, il en visualise le contenu et envoie un message de confirmation ou d'infirmation vers l'opérateur. A la réception du message de confirmation ou d'infirmation, l'opérateur validera, vis-à-vis du site Internet, ou invalidera l'action que souhaite effectuer l'utilisateur. Dans l'invention il y a donc un opérateur qui certifie à un fournisseur l'identité d'un utilisateur.

L'invention concerne donc un procédé de sécurisation d'une transaction entre un utilisateur (101) et un fournisseur (136.1) sur un réseau (121) de type Internet caractérisé en ce qu'il comprend les étapes suivantes en succession :
- l'utilisateur se connecte (201) à un site (133.1) du fournisseur sur le réseau de type Internet,
- l'utilisateur sélectionne (202) un produit sur le site du fournisseur,
- l'utilisateur choisit (203, 204) sur le site du fournisseur un mode d'acquittement de droits via un opérateur auquel est abonné l'utilisateur,
- on établit (206) une connexion entre le site du fournisseur et un serveur de l'opérateur,
- le fournisseur émet (206) une requête dite F.O. vers l'opérateur pour savoir si l'opérateur accepte de prendre en charge l'acquittement des droits liés au produit sélectionné par l'utilisateur,
- l'opérateur émet (207) une requête dite O.U. vers l'utilisateur et via un réseau pour savoir si l'utilisateur est bien à l'origine de la sélection,
- l'utilisateur émet (209, 212) un message dit U.O. de réponse à la requête O.U. vers l'opérateur et via un réseau,
- l'opérateur émet (210, 213) un message dit O.F. de réponse à la requête F.O. vers le fournisseur et via un réseau, le message O.F. correspondant au message U.O.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 une illustration de moyens utiles pour la mise en oeuvre du procédé selon l'invention ;
- Figure 2 : une illustration d'étapes du procédé selon l'invention.

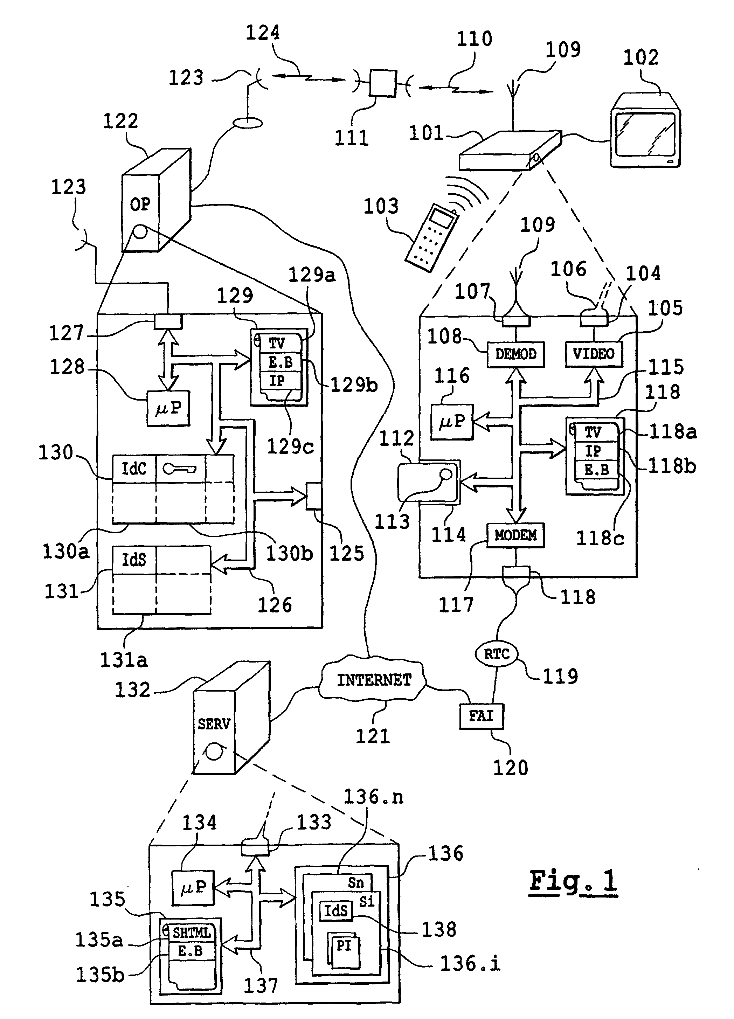

La figure 1 montre un STB 101 (Set Top Box) selon l'invention, ou récepteur/décodeur, connecté à un poste 102 de télévision. Les appareils 101 et 102 sont situés chez un utilisateur. Le STB 101 est commandé grâce à une télécommande 103. Cette télécommande 103 comporte un clavier et un dispositif de pointage. Le STB 101 comporte un connecteur 104, de type péritel, par exemple connecté à un circuit 105 vidéo. Le circuit 105 produit des signaux d'image qui sont envoyés via le connecteur 104 et un câble 106 au poste 102 de télévision.

Le STB 101 comporte aussi un connecteur 107 connecté à des circuits 108 de modulation et démodulation d'un flux de télévision. Le connecteur 107 est connecté à une antenne 109. L'antenne 109 permet d'établir une connexion 110 hertzienne avec un satellite 111. Le satellite 111 diffuse des programmes de télévision. Le rôle des circuits 108 est d'extraire du flux d'information reçu par l'antenne 109 les données qui intéressent l'utilisateur du STB 101. Les circuits 108 peuvent discriminer les informations intéressant l'utilisateur du STB 101 grâce à une carte 112 à puce 113 insérée dans un lecteur 114 du STB 101. Les circuits 105, 108 et 114 sont connectés à un bus 115. Un bus est un ensemble de fils et de pistes comportant ces éléments en nombre suffisant pour véhiculer des signaux d'adresses, de commandes, de données, d'interruption, d'horloge et d'alimentation.

La puce 113 comporte des données et des codes instructions qui permettent au circuit 108 d'extraire du flux d'informations qu'il reçoit de l'antenne 109 les informations concernant l'utilisateur du STB 101. Cet utilisateur est identifié par les données enregistrées dans la puce 113. La puce 113 permet aussi de décoder ces informations.

Le STB 101 comporte aussi un microprocesseur 116, une mémoire 117 et un modem 118. Les éléments 116 à 118 sont connectés au bus 115. Le microprocesseur 116 effectue des actions, commandées par des codes instructions contenues dans la mémoire 118. La mémoire 118 comporte plusieurs zones. Une première zone 118a comporte des codes instructions qui commandent le microprocesseur lorsque celui-ci effectue des actions en rapport avec l'activité de télévision du STB 101. Une zone 118b comporte des codes instructions relatifs à des actions de navigation sur un réseau télématique. Notamment la zone 118b comporte des codes instructions correspondant à un programme de navigation sur Internet. De tels programmes sont bien connus et il en existe plusieurs actuellement sur le marché. Une zone 118c comporte des codes instructions correspondant à une activité liée à l'invention. La mémoire 118 comporte d'autres zones non décrites, notamment une zone de travail et une zone de données.

Le modem 117 permet à l'utilisateur de se connecter, via le STB 101, à un réseau de type Internet. Le modem 117 peut être de type standard tel que celui qui est représenté sur la figure 1. Dans ce cas, le modem 117 est connecté à un connecteur 118 compatible avec le réseau téléphonique commuté par exemple. Mais le modem 117 pourrait être un modem numérique, où le réseau téléphonique pourrait être un réseau hertzien du type GSM par exemple. Il est donc possible, via le connecteur 118, de connecter le STB 101 au réseau téléphonique commuté, donc à un fournisseur 120 d'accès à Internet (FAI). Le FAI 120 permet à l'utilisateur du STB 101 d'accéder au réseau 121 Internet.

La figure 1 montre aussi un serveur 122 d'un opérateur de télévision. Le serveur 122 est connecté à une antenne 123, ce qui permet d'établir une liaison 124 hertzienne avec le satellite 111. Un serveur 122 fait donc partie des moyens qu'utilise un opérateur de télévision pour produire des signaux de télévision qui seront diffusés par le satellite 111. Le serveur 122 est aussi connecté au réseau 121 Internet. Cette connexion peut se faire, par exemple, par une ligne spécialisée. Un serveur 122 peut aussi avoir une adresse Internet fixe et être connecté directement sur un routeur de réseau Internet. La connexion du serveur 122 à Internet se fait via un connecteur 125 du serveur 122. Le connecteur 125 est aussi connecté à un bus 126. Le serveur 122 comporte aussi un connecteur 127 connecté au bus 126 et à l'antenne 123.

Le serveur 122 comporte aussi un microprocesseur 128, une mémoire 129 de programme, une mémoire 130 de client et une mémoire 131 de site. Le microprocesseur 128 exécute des actions commandées par des codes instructions enregistrées dans la mémoire 129. Les éléments 128 à 131 sont connectés au bus 126. La mémoire 129 comporte une zone 129a qui commande le microprocesseur 128 lorsque celui-ci produit des données de télévision qui devront être diffusées via l'antenne 123. La mémoire 129 comporte une zone 129b qui comporte des codes instructions qui commande le microprocesseur 128 lorsque celui-ci effectue des actions en rapport avec le procédé selon l'invention. La mémoire 129 comporte une zone 129c qui comporte des codes instructions qui commande le microprocesseur 128 lorsque le serveur 122 envoie et reçoit des messages via le réseau 121 Internet. La mémoire 129 comporte aussi d'autres zones qui ne sont pas décrites et qui sont notamment des zones de travail et des zones de stockage des données.

La mémoire 130 est structurée en lignes et en colonnes. Chaque ligne correspond à un client de l'opérateur qui gère le serveur 122. Une colonne 130a correspond à un identifiant du client, une colonne 130b correspond à l'autorisation, ou interdiction, du client à utiliser le procédé de certification selon l'invention.

La mémoire 131 est elle aussi structurée en lignes et en colonnes, chaque ligne correspondant à un site, et chaque colonne à une information sur ces sites. La table 131 comporte notamment une colonne 131a correspondant à un identifiant d'un site qui est habilité à demander une certification à l'opérateur. Dans la pratique un site appartient à une personne ou à un organisme. Cette personne, ou cet organisme prend, donc contact avec l'opérateur afin de conclure un accord qui permettra à la personne ou à l'organisme de proposer sur son site un mode de certification via l'opérateur. Une fois cet accord conclu l'opérateur fournit à la personne ou l'organisme un identifiant et référence cette personne ou cet organisme dans la table 131.

La figure 1 montre aussi un serveur 132 de site Internet. Le serveur 132 est donc connecté au réseau 121 Internet via un connecteur 133. En général, ce type de serveur est connecté soit par une ligne spécialisée à haut débit, soit directement sur un routeur du réseau Internet. Le serveur 132 comporte aussi un microprocesseur 134, une mémoire 135 de programme, et une mémoire 136 de site. Les éléments 133 à 136 sont connectés par un bus 137. Le microprocesseur 134 exécute des actions commandées par des codes instructions de la mémoire 135. La mémoire 135 comporte une zone 135a où sont enregistrées des codes instructions correspondant à un serveur de page HTML. C'est-à-dire à un serveur standard de type Internet. La mémoire 135 comporte aussi une zone 135b où sont enregistrés les codes instructions correspondant à une activité liée au procédé selon l'invention.

La mémoire 136 comporte des descriptions de plusieurs sites Internet. Cela revient à dire que le serveur 132 héberge plusieurs sites dont celui du fournisseur. Chaque description, de 136.1 à 136.n et par exemple la description S1 du site 136.1, comporte la description de plusieurs pages P1 à Pn au format HTML, ainsi qu'un identifiant 138 correspondant à un accord passé avec l'opérateur de télévision gérant le serveur 122.

Dans la pratique, les séparations entre les zones des mémoires de programme 129, 118 et 135 ne sont pas aussi nettes que ce qui a été représenté sur la figure 1. En effet, plusieurs programmes peuvent partager d'autres bouts de programme. C'est-à-dire qu'un programme peut appeler un sous-programme. Cependant, cette présentation permet de bien mettre en évidence les différents éléments utiles pour la réalisation du procédé selon l'invention.

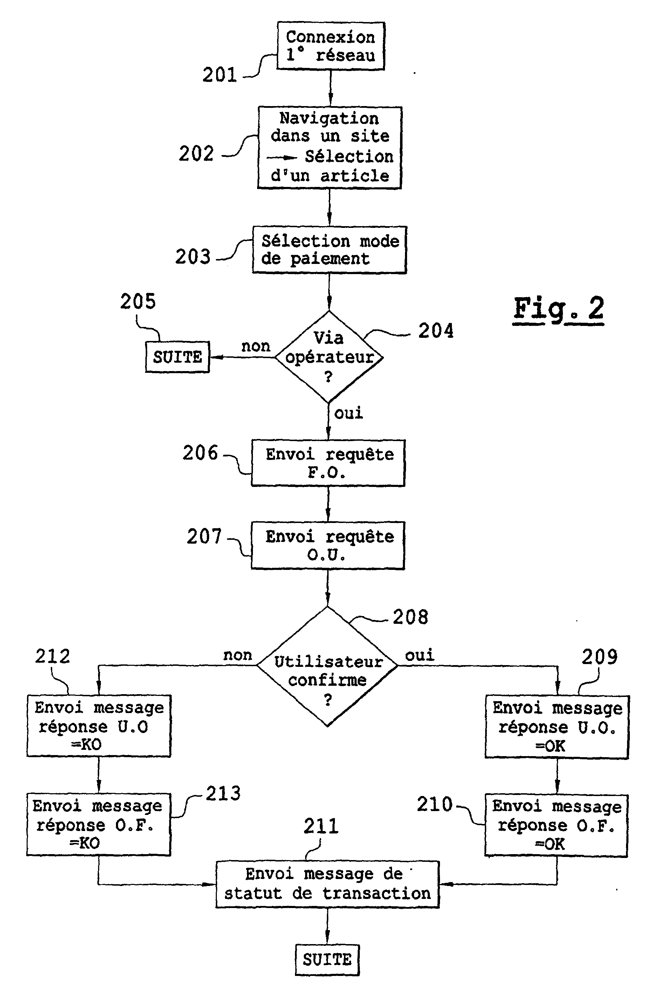

Dans la description de la figure 2 des messages/requêtes sont envoyés/reçus par des sites, des serveurs; un utilisateur, un opérateur, ou un fournisseur. Dans la pratique un site est hébergé par un serveur comportant une application logiciel qui se charge de la gestion des messages émis ou reçus par les sites qu'il héberge. Les messages émis ou reçus par l'utilisateur sont en fait traité par un microprocesseur et des programmes du STB 101. Cela est aussi vrai pour l'opérateur rapporté au serveur 122, et pour le fournisseur rapporté au serveur 132. On parle donc d'envoyer/recevoir des messages vers/de l'utilisateur, l'opérateur ou le fournisseur dans un souci de clarification de l'exposé.

La figure 2 montre une étape 201 préliminaire de connexion à un premier réseau. On prend l'exemple dans la description que le premier réseau est le réseau Internet. L'utilisateur, c'est-à-dire la personne qui utilise le STB 101 et qui est identifié grâce aux informations contenues dans la puce 113, utilise la télécommande 103 pour provoquer la connexion du STB 101 au réseau Internet. Le microprocesseur 116, commandé par les codes instructions de la zone 118b va donc paramétrer le modem 117 pour que celui-ci compose le numéro du FAI auquel est abonné l'utilisateur. Le FAI établit alors une connexion entre le réseau 121 Internet et le STB 101. Le STB 101 reçoit une page d'accueil, par exemple au format HTML, qui est traité par le microprocesseur 116 commandé par les codes instructions de la zone 118b pour produire une image qui sera transmise au circuit 105 vidéo. Cette image est alors affichée sur l'écran de la télévision 102. Cet écran fait aussi apparaître un pointeur que l'utilisateur peut déplacer en utilisant le dispositif de pointage de la télécommande 103. La télécommande 103 permet donc à l'utilisateur de sélectionner un certain nombre d'éléments qui sont affichés sur l'écran 102. Parmi ces éléments on peut citer notamment des liens vers d'autres pages et d'autres sites Internet, ou vers des fichiers que l'utilisateur peut télécharger. Dans la pratique les éléments que l'utilisateur peut sélectionner sont tous ceux qui peuvent être décrit en utilisant, par exemple, le langage HTML.

D'une étape 201 on passe à une étape 202 de navigation dans un site et de sélection d'un article. Dans l'étape 202 l'utilisateur s'est connecté dans un site qui lui propose, par exemple, une liste de livres. Ce site est par exemple le site S1 du serveur 132. L'utilisateur utilise le dispositif de pointage pour sélectionner l'un des livres de la liste. On passe à une étape 203 de sélection du mode de paiement.

Dans l'étape 203 lorsque l'utilisateur a sélectionné un livre, le STB 101 détecte cette sélection et envoie un message à l'adresse du serveur 132. Le serveur 132 sait ainsi que l'utilisateur a sélectionné un livre. Le serveur 132 envoie en réponse une page au format HTML à l'adresse de l'utilisateur. Cette page comporte, par exemple, un descriptif du livre relativement à son contenu et à sa valeur. Cette page comporte aussi une liste de modes de paiement possibles. Parmi cette liste on trouve entre autre une possibilité de paiement par certification via un opérateur de télévision auquel est abonné l'utilisateur. Cette nouvelle page est elle aussi affichée sur l'écran 102. On passe à une étape 204 où on détermine si le choix de l'utilisateur est de procéder à la certification via un opérateur.

Dans les étapes 202 et 203, lorsqu'on dit que le serveur 132 envoie des pages au format HTML à l'adresse du STB 101, cela signifie que le microprocesseur, commandé par des codes instructions de la zone 135a, remplit son rôle de serveur HTML. Un tel serveur est connu, on peut citer par exemple le serveur APACHE.

Si l'utilisateur n'a pas choisi le mode de certification via un opérateur on passe de l'étape 204 à une étape 205. Dans l'étape 205 l'utilisateur a soit choisi un mode de paiement standard, soit choisi de ne pas acheter les livres. Les opérations s'effectuent donc de manière connue, c'est-à-dire comme une navigation normale sur le réseau Internet.

Si l'utilisateur a choisi le mode de certification par un opérateur de télévision auquel il est abonné on passe à une étape 206 d'envoi d'une requête F.O.

Dans l'étape 206, l'utilisateur vient de valider, grâce à la télécommande 103, la sélection de paiement, par certification via un opérateur de télévision auquel il est abonné. Suite à cette sélection, l'utilisateur a dû fournir, par exemple, son nom et son prénom afin que ceux-ci soient envoyés à l'adresse du serveur 132 de l'opérateur de télévision. Le microprocesseur 134 commandé par des codes instructions de la zone 135b constitue alors une requête comportant l'identifiant 137 du site S1 auquel l'utilisateur est connecté, les nom et prénom de l'utilisateur et un code instruction correspondant à une demande de certification. La requête F.O. comporte aussi une description de l'action commanditée par l'utilisateur. Par exemple la requête F.O. comporte le titre d'un livre et le prix de ce livre. Cette requête F.O. est alors envoyée à l'adresse du serveur 122 géré par l'opérateur de télévision auquel est abonné l'utilisateur. Le contenu de la requête F.O. peut être cryptée. La requête F.O. peut être envoyée soit via le réseau 121 Internet, soit par une ligne directe via le réseau RTC. C'est-à-dire que dans ce cas le serveur 132 est doté d'un modem et connaît un numéro de téléphone correspondant au serveur 122. Dans ce cas il se connecte en utilisant ce numéro de téléphone. N'importe quel réseau de télécommunication peut être utilisé pour envoyer la requête F.O. On passe à une étape 207d'envoi de la requête O.U.

Dans l'étape 207, le serveur 122 reçoit la requête F.O. Le microprocesseur 128 commandé par des codes instructions de la zone 129b décode cette requête. Si la requête F.O. est cryptée, le microprocesseur la décrypte. Le microprocesseur 128 lit dans la requête F.O. l'identifiant du site. Le microprocesseur parcourt alors la table 131 à la recherche de cet identifiant. S'il ne trouve pas l'identifiant dans la table 131, cela signifie qu'il n'y a pas d'accord entre le possesseur du site et S1 et l'opérateur de télévision. Les opérations s'arrêtent donc là. Si l'identifiant est présent dans la table 131, le microprocesseur 128 va effectuer une recherche dans la table 130 à la recherche de l'identifiant de l'utilisateur, à savoir son nom et son prénom. Cette recherche s'effectue donc dans la colonne 130a.

Si l'identifiant de l'utilisateur est trouvé, le microprocesseur consulte dans la ligne correspondante, la colonne 130b. Si l'utilisateur n'est pas habilité à avoir recours à la certification le microprocesseur 128 émet en direction du serveur 132 un message comportant cette information.

Si l'utilisateur est habilité à avoir recours à la certification par l'opérateur le microprocesseur 128 constitue une requête O.U. comportant une description de l'opération qu'a commanditée l'utilisateur et éventuellement un aléa. Cette requête O.U. est cryptée selon les paramètres d'abonnement de l'utilisateur à l'opérateur de télévision. Puis cette requête est intégrée dans un EMM et diffusée via le réseau de diffusion. C'est-à-dire via l'antenne 123 et le satellite 111. On passe à une étape 208 de confirmation ou d'invalidation par l'utilisateur. Un EMM est un message de maintenance d'un réseau de télévision. Un opérateur de télévision envoie régulièrement de tels EMM à ses abonnés. Un EMM est crypté et destiné à un abonné ou à un groupe d'abonnés à l'opérateur émettant l'EMM.

Dans la pratique la requête O.U. pourrait aussi être envoyer via un SMS, ou un autre réseau qu'un réseau de télévision. Cependant les caractéristiques de sécurité d'un réseau de télévision numérique en font un choix idéal.

Dans l'étape 208, le STB 101 reçoit, via l'antenne 109 et les circuits 108 un EMM qui lui est destiné. Le microprocesseur 116 reçoit donc cet EMM et le décrypter en fonction des paramètres contenus dans la puce 113. Puis le microprocesseur 116 provoque l'affichage sur l'écran 102 des informations contenues dans cet EMM, il propose en même temps à l'utilisateur de valider cette information ou de l'invalider. Ces informations sont la description d'une action commanditée sur le réseau Internet.

Si l'utilisateur était par exemple en train de regarder la télé, l'affichage peut se faire en plein écran ou dans une petite fenêtre sur l'écran 102. Si l'utilisateur n'utilisait pas la télévision au moment où l'EMM est arrivé, cette action est retardée jusqu'à ce que l'utilisateur active le STB 101 ou la télévision 102.

L'utilisateur utilise la télécommande 103 pour confirmer ou infirmer. Si l'utilisateur confirme que c'est bien lui qui a commandité l'action décrite, on passe à une étape 209 d'envoi d'un message de réponse U.O = OK. Dans l'étape 209 le microprocesseur, commandé par des codes instructions de la zone 118c, constitue un message comportant un identifiant de l'action, un code instruction signifiant qu'il confirme avoir commandité cette action, et éventuellement l'aléa qui a été transmis avec le message requête O.U. Cet aléa permet de confirmer que le message U.O. est bien une réponse à la requête O.U. Cependant cet aléa n'est pas forcément utile dans le cas d'une certification par un opérateur de télévision. En effet dans ce cas la requête O.U. est envoyée via un EMM qui ne peut être décodé que par son destinataire qui possède une carte à puce l'identifiant comme étant le destinataire. La réponse UO est envoyée soit par le réseau Internet soit par un autre réseau. On passe alors à une étape 210 d'envoi des messages de réponse OF positif.

Dans l'étape 210 le microprocesseur 128 reçoit et décode le message U.O. envoyé à l'étape 209. Il extrait de ce message le fait que l'utilisateur confirme son action. Il va alors envoyer à l'adresse du site S1 un message comportant la validation de l'action. Le gérant du site S1 sait alors qu'il peut entreprendre les actions commanditées par l'utilisateur. On passe à une étape 211 facultative d'envoi d'un message de statut de transaction. Dans l'étape 211 le microprocesseur 128 envoie un message, par exemple un e-mail, à l'utilisateur qui a commandité l'action. Dans ce message il rappelle l'action qui a été confirmée ainsi que le coût de cette action. Dans l'étape 211, le microprocesseur 128 met aussi à jour un champ de la table 130 correspondant aux opérations dues par l'utilisateur à l'opérateur. En effet au cours de la transaction l'opérateur s'est porté garant du paiement pour l'utilisateur. C'est d'ailleurs l'opérateur qui effectuera le paiement du fournisseur gérant le site S1. L'opérateur rapportera le coût de cette transaction sur la facture qu'il envoie à l'utilisateur.

A partir de l'étape 208 si l'utilisateur a invalidé le contenu de la requête O.U., le microprocesseur 108 va constituer un message de réponse U.O.= KO négatif. Tout se passe comme dans l'étape 209 si ce n'est que le code instruction correspond à une invalidation de l'action commanditée. On passe alors à une étape 213 d'envoi d'une réponse OF négative. L'étape 213 est la pendante de l'étape 210 si ce n'est que la réponse est négative. Dans ce cas le gérant du site S1 sait que l'utilisateur ne confirme pas son action ou sa commande. Il ne s'en suivra donc aucune action. On passe à l'étape 211. Dans ces cas dans l'étape 211 facultative le serveur 122 enverra un e-mail indiquant à l'utilisateur que la transaction qu'il avait commanditée a été abandonnée.

De l'étape 211 on passe à une étape de suite qui peut être par exemple la poursuite de la navigation sur Internet.

Si une personne mal intentionnée usurpe le nom et le prénom d'une personne abonnée à l'opérateur pour effectuer un achat sur Internet, par exemple, celle-ci ne pourra pas aller au bout de son achat car cette personne mal intentionnée ne recevra pas l'EMM correspondant à la demande de certification. En effet il est assez aisé de se procurer le nom et le prénom d'une personne mais il est beaucoup plus difficile de se procurer la carte à puce de cette personne comportant les informations de son abonnement à un opérateur de télévision. De plus l'utilisateur dont le nom et le prénom auront ainsi été illégalement utilisé sera averti de la chose. En effet cet utilisateur recevra un EMM lui indiquant qu'une action a été commanditée en son nom. Cela est fortement dissuasif pour les fraudeurs.

L'invention enseigne qu'un opérateur se porte garant pour un utilisateur vis à vis d'un fournisseur. Cette garantie est donnée après que l'opérateur ait obtenu une confirmation que la commande passée l'a bien été par l'utilisateur pour lequel il se porte garant. Dans la description on a considéré que cette garantie était obtenue en utilisant un réseau de diffusion de télévision par satellite, notamment pour l'envoie du message O.U.. Dans la pratique l'opérateur n'est pas forcément un opérateur de télévision et donc n'utilise pas forcement un réseau de diffusion par satellite. Les messages échangés peuvent l'être via un réseau câblé de télévision, un réseau ADSL, ou tout autre réseau ou protocole permettant à l'opérateur d'obtenir une confirmation de la commande par l'utilisateur. Ici les termes opérateur, utilisateur et fournisseur sont employés pour identifié les acteurs de la transaction décrite dans la description.

Dans la pratique les réseaux utilisés pour l'échange des messages et requêtes peuvent être différents ou identiques. On peut en effet imaginer un scénario dans lequel tous les messages et requêtes sont échangés via Internet mais en utilisant des protocoles différents. Il est aussi possible dans un cas de n'utiliser qu'un seul protocole, SSL (protocole sécurisé) par exemple. Il faudrait alors que l'appareil 101 comporte des moyens lui permettant d'être connecté aux réseaux utilisés, et d'utiliser les protocoles mis en oeuvre pour la transaction. Un tel appareil est par exemple un ordinateur personnel.

On note aussi que la commande passée par l'utilisateur au fournisseur ne l'est pas forcement par Internet. Un autre type de réseau, par exemple le Minitel, permet de passer de telles commandes.

## Revendications

1. Procédé de sécurisation d'une transaction entre un utilisateur (101) et un fournisseur (136.1) sur un réseau (121) de type Internet **caractérisé en ce qu'**il comprend les étapes suivantes en succession :
- l'utilisateur se connecte (201) à un site (133.1) du fournisseur sur le réseau de type Internet,
- l'utilisateur sélectionne (202) un produit sur le site du fournisseur,
- l'utilisateur choisit (203, 204) sur le site du fournisseur un mode d'acquittement de droits via un opérateur auquel est abonné l'utilisateur,
- on établit (206) une connexion entre le site du fournisseur et un serveur (122) de l'opérateur,
- le fournisseur émet (206) une requête dite F.O. vers l'opérateur pour savoir si l'opérateur accepte de prendre en charge l'acquittement des droits liés au produit sélectionné par l'utilisateur,
- l'opérateur émet (207) une requête dite O.U. vers l'utilisateur et via un réseau pour savoir si l'utilisateur est bien à l'origine de la sélection,
- l'utilisateur émet (209, 212) un message dit U.O. de réponse à la requête O.U. vers l'opérateur et via un réseau,
- l'opérateur émet (210, 213) un message dit O.F. de réponse à la requête F.O. vers le fournisseur et via un réseau, le message O.F. correspondant au message U.O.

2. Procédé selon la revendication 1, **caractérisé en ce que** l'opérateur est un opérateur (122 - 124, 101, 109 - 111) de télévision.

3. Procédé selon la revendication 2, **caractérisé en ce que** la requête O.U est émise sous la forme d'un message de maintenance.

4. Procédé selon l'une des revendication 1 ou 3, **caractérisé en ce que** la requête O.U. comporte un aléa à inclure dans le message U.O. de réponse.

5. Procédé selon l'une des revendication l'à 4, **caractérisé en ce que** l'on crypte au moins l'un des messages ou requêtes émis.

6. Procédé selon l'une des revendications 1 à 5, **caractérisé en ce que** l'opérateur envoie (211) un message rapportant le statut de la transaction à l'utilisateur.

7. Procédé selon l'une des revendications 1 à 6, **caractérisé en ce que** le message F.O. comporte des données permettant à l'opérateur d'identifier l'utilisateur.

8. Procédé selon l'une des revendications 1 à 7, **caractérisé en ce que** le message F.O. comporte des données (137) permettant à l'opérateur d'identifier le fournisseur.

## Patentansprüche

1. Verfahren zum Sichern einer Transaktion zwischen einem Anwender (101) und einem Dienstanbieter (136.1) in einem Netz (121) in der Art des Internets,
**dadurch gekennzeichnet, dass** es die aufeinander folgenden Schritte aufweist:
Verbinden (201) des Anwenders mit einer Zugriffsadresse (133.1) des Dienstanbieters in dem Netz in der Art des Internets,
Aussuchen (202) eines Produkts unter der Zugriffsadresse des Dienstanbieters durch den Anwender,
Auswählen (203, 204) eines Zahlungsmodus unter der Zugriffsadresse des Dienstanbieters über einen Betreiber, dessen Abonnent der Anwender ist,
Herstellen (206) einer Verbindung zwischen der Zugriffsadresse des Dienstanbieters und einem Server (122) des Betreibers, Absenden (206) einer FO- Anfrage an den Betreiber, um zu erfahren, ob der Betreiber Verantwortung für die Zahlung in Bezug auf das durch den Anwender ausgesuchte Produkt übernimmt,
Absenden (207) einer OU- Anfrage an den Anwender und über ein Netz, um zu erfahren, ob der Anwender Urheber des Aussuchvorgangs ist,
Absenden (209, 212) einer UO- Nachricht zur Beantwortung der OU- Anfrage an den Betreiber und über ein Netz,
Absenden (210, 213) einer OF- Nachricht zur Beantwortung der FO- Anfrage an den Dienstanbieter und über ein Netz, wobei die OF- Nachricht der UO- Nachricht entspricht.

2. Verfahren nach Anspruch 1,
**dadurch gekennzeichnet, dass**
der Betreiber eine Fernsehsender- Betreibergesellschaft (122 - 124, 101, 109 - 111) ist.

3. Verfahren nach Anspruch 2,
**dadurch gekennzeichnet, dass**
die OU- Anfrage in Form einer Wartungsnachricht abgesendet wird.

4. Verfahren nach einem der Ansprüche 1 bis 3,
**dadurch gekennzeichnet, dass**
die OU- Anfrage eine Zufallsgröße enthält, die in der UO-Antwort- Nachricht enthalten ist.

5. Verfahren nach einem der Ansprüche 1 bis 4,
**dadurch gekennzeichnet, dass**
wenigstens eine der abgesendeten Nachrichten oder Abfragen verschlüsselt wird.

6. Verfahren nach einem der Ansprüche 1 bis 5,
**dadurch gekennzeichnet, dass**
der Betreiber eine Nachricht absendet (211), die den Status der Transaktion an den Anwender angibt.

7. Verfahren nach einem der Ansprüche 1 bis 6,
**dadurch gekennzeichnet, dass**
die FO- Nachricht Daten enthält, die es dem Betreiber ermöglichen, den Anwender zu identifizieren.

8. Verfahren nach einem der Ansprüche 1 bis 7,
**dadurch gekennzeichnet, dass**
die FO- Nachricht Daten (137) enthält, die es dem Betreiber ermöglichen, den Dienstanbieter zu identifizieren.

## Claims

1. Method for performing a secure transaction between a user (101) and a supplier (136.1) on a network (121) of internet type, **characterised in that** it comprises the following steps in succession:
- the user connects (201) to a site (133.1) of the supplier on the network of internet type,
- the user selects (202) a product on the supplier's site,
- the user chooses (203, 204) on the supplier's site a method of payment of dues via an operator to which the user subscribes,
- a connection is established (206) between the supplier's site and a server (122) of the operator,
- the supplier transmits (206) a so-called F.O request to the operator to establish if the operator agrees to take responsibility for the payment of the dues connected with the product selected by the user,
- the operator transmits (207) a so-called O.U to the user and via a network to establish if the user is indeed the originator of the selection,
- the user transmits (209, 212) a so-called U.O in reply to the O.U request to the operator and via a network,
- the operator transmits (210, 213) a so-called O.F message in reply to the F.O request to the supplier and via a network, the O.F message corresponding to the U.O message.

2. Method according to claim 1, **characterised in that** the operator is a television operator (122 - 124, 101, 109 - 111).

3. Method according to claim 2, **characterised in that** the operator-user request is transmitted in the form of a maintenance message.

4. Method according to one of claims 1 or 3, **characterised in that** the O.U request comprises a random variable to be included in the U.O message in reply.

5. Method according to one of claims 1 to 4, **characterised in that** at least one of the message or requests transmitted is encrypted.

6. Method according to one of claims 1 to 5, **characterised in that** the operator sends (211) a message reporting the status of the transaction to the user.

7. Method according to one of claims 1 to 6, **characterised in that** the F.O message comprises data allowing the operator to identify the user.

8. Method according to one of claims 1 to 7, **characterised in that** the F.O message comprises data (137) allowing the operator to identify the supplier.
